(19) Europäisches Patentamt
European Patent Office
Office européen des brevets

(11) **EP 3 554 927 B1**

(12) **FASCICULE DE BREVET EUROPEEN**

(45) Date de publication et mention de la délivrance du brevet:
**06.01.2021 Bulletin 2021/01**

(21) Numéro de dépôt: **17816981.9**

(22) Date de dépôt: **04.12.2017**

(51) Int Cl.:
***B62D 35/00*** *(2006.01)*

(86) Numéro de dépôt international:
**PCT/FR2017/053375**

(87) Numéro de publication internationale:
**WO 2018/109311 (21.06.2018 Gazette 2018/25)**

(54) **DISPOSITIF DÉFLECTEUR AÉRODYNAMIQUE POUR ROUE DE VÉHICULE AUTOMOBILE**

AERODYNAMISCHE ABLENKVORRICHTUNG FÜR KRAFTFAHRZEUGRAD

AERODYNAMIC DEFLECTOR DEVICE FOR MOTOR VEHICLE WHEEL

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **13.12.2016 FR 1662345**

(43) Date de publication de la demande:
**23.10.2019 Bulletin 2019/43**

(73) Titulaire: **Valeo Systemes Thermiques**
**78322 Le Mesnil Saint-Denis Cedex (FR)**

(72) Inventeur: **HERLEM, Jean-Paul**
**78322 Le Mesnil Saint Denis Cedex (FR)**

(74) Mandataire: **Tran, Chi-Hai**
**Valeo Systèmes Thermiques**
**8, rue Louis Lormand**
**CS 80517 La Verrière**
**78322 Le Mesnil Saint Denis Cedex (FR)**

(56) Documents cités:
**EP-A1- 1 040 985     FR-A1- 2 858 793**
**FR-A1- 2 927 303     FR-A1- 2 959 195**

## Description

La présente invention concerne un dispositif déflecteur aérodynamique pour roue de véhicule automobile.

Dans le cadre de la réduction de consommation en carburant, et en conséquence, de la réduction d'émission de gaz à effet de serre ($CO_2$) ou polluants ($No_x$) par un véhicule, il est connu de disposer un déflecteur aérodynamique devant les roues du véhicule.

En contrôlant l'écoulement de l'air au niveau des roues et des passages de roue dans la carrosserie, il est théoriquement possible de réduire jusqu'à 30 % la traînée du véhicule, matérialisée par le facteur $C_x$, dit coefficient de traînée propre du véhicule, dans le calcul de la force $F_x$ de traînée ou frottement fluide dans l'air qui se lit :

$$F_x = q.S.C_x$$

où q désigne la pression dynamique ($q = 1/2\ \rho V^2$ avec $\rho$ la masse volumique de l'air, et V la vitesse relative de l'air par rapport au véhicule), et $S$ la surface de référence du véhicule.

Les déflecteurs aérodynamiques utilisés pour contrôler l'écoulement de l'air au niveau des roues se présentent généralement sous forme soit d'une bavette souple, soit d'un déflecteur rétractable en matière plastique ou métallique. Les déflecteurs rétractables se présentent généralement sous forme d'une surface plane ou incurvée, inclinée vers l'arrière, d'une largeur comparable à la roue devant laquelle ils sont placés. Ils peuvent sélectivement être déplacés entre au moins deux positions, une position escamotée, où une surface déflectrice est contenue dans un logement, et une position déployée où la surface déflectrice dépasse de la carrosserie du véhicule et défléchit le flux d'air au niveau de la roue.

Les déflecteurs rétractables sont généralement configurés pour adopter la position escamotée à des vitesses faibles, par exemple inférieures à une vitesse limite, par exemple de 50 ou 60km/h (vitesse généralement adoptée en agglomération), et la position déployée lorsque le véhicule atteint et dépasse la vitesse limite.

Les documents FR 2 927 303 A1 et EP 1 040 985 A1 révèlent des dispositifs déflecteurs aérodynamiques avec des dispositifs à ressort pour éviter d'endommager les déflecteurs en cas de contact avec des obstacles. Cependant, les deux dispositifs sont actionnés passivement et ne comportent pas de mécanisme d'actionnement distinct.

Les déflecteurs rétractables sont généralement plus efficaces que les bavettes souples, qui présentent une taille réduite pour éviter tout contact avec d'éventuels obstacles sur la route (pierre, branche, détritus), mais les déflecteurs rétractables, de dimensions plus importantes passent près de la route et peuvent être endommagés lorsque la voiture roule sur un tel obstacle.

Lors d'un tel événement, les déflecteurs peuvent être déformés, se détacher de leur support ou se briser. La proximité avec la roue entraîne un risque de sur-accident en ce qu'un éclat ou une extrémité du déflecteur déformé, détaché ou brisé peut endommager la roue et notamment crever un pneumatique alors que le véhicule circule à vitesse élevée.

Afin de résoudre au moins partiellement le problème précédemment mentionné, l'invention a pour objet un dispositif déflecteur aérodynamique pour roue de véhicule automobile, comprenant :

- une paroi déflectrice montée mobile par rapport à un cadre fixe entre une position escamotée d'une part où la paroi déflectrice est relevée et une position déployée dans laquelle la paroi déflectrice est abaissée par rapport au cadre fixe,
- un actionneur configuré pour déplacer la paroi déflectrice entre les positions escamotée et déployée.

Selon l'invention, le dispositif déflecteur comporte en outre un module élastique déformable élastiquement, agencé de manière à déplacer la paroi déflectrice vers la position déployée lorsque la paroi déflectrice n'est plus dans la position déployée. Le module élastique est disposé en prise de force avec un cadre mobile portant un mécanisme de déploiement de la paroi déflectrice.

Autrement dit, le dispositif déflecteur comporte en outre un module élastique déformable élastiquement entre un état de moindre déformation et un état déformé, et configuré pour que, à l'état déformé du module élastique, la paroi déflectrice soit au moins partiellement relevée, ou escamotée. En d'autres termes, le module élastique est apte à déplacer la paroi déflectrice lorsqu'il passe d'un état de déformation à l'autre.

Le dispositif déflecteur réalisé permet d'éviter la détérioration de la paroi déflectrice en cas de choc avec un obstacle sur la route. En effet, le module élastique est apte à absorber l'énergie du choc tout en ramenant la paroi déflectrice vers sa position initiale déployée maximale.

Ledit module de commande peut présenter une ou plusieurs des caractéristiques suivantes, prises seules ou en combinaison.

Le module élastique comporte un ressort hélicoïdal, ou une lame-ressort, ou un vérin à circulation de fluide, ou une bande élastique, ou encore un corps compressible ou étirable en matériau élastique.

Il comporte un axe transversal autour duquel la paroi déflectrice est mise en rotation, formant une charnière entre le cadre mobile et un cadre fixe, et le module élastique est disposé autour de l'axe transversal et entre en prise d'une part avec le cadre mobile et d'autre part avec le cadre fixe.

Le module élastique comporte un ressort hélicoïdal déformable en torsion et en le ressort en torsion entoure l'axe transversal, et ledit ressort hélicoïdal comporte deux extrémités, respectivement en prise avec le cadre fixe et le cadre mobile.

Il comporte plusieurs modules élastiques déformables en translation verticale et disposés sur les bords du cadre mobile.

La paroi déflectrice est mobile en rotation autour d'un axe entourant un arbre fixe, comportant un élément élastique de rappel configuré pour exercer un couple de rappel la paroi déflectrice, et le module élastique comporte un élément élastique en torsion, relié d'une part à un pignon d'actionnement mis en mouvement par un moteur et d'autre part à la paroi déflectrice, de sorte à exercer un couple opposé au couple de rappel croissant avec la rotation du pignon d'actionnement.

La force nécessaire pour amener le module élastique à l'état déformé est inférieure à 70 % d'une force minimale entraînant une déformation irréversible ou une rupture de la paroi déflectrice.

D'autres caractéristiques et avantages de l'invention apparaîtront plus clairement à la lecture de la description suivante, donnée à titre d'exemple illustratif et non limitatif, et des dessins annexés parmi lesquels :

- la figure 1 montre schématiquement un véhicule en vue de côté avec un dispositif déflecteur aérodynamique,

- la figure 2 montre schématiquement le dispositif déflecteur de la figure 1 en vue en coupe de côté,

- la figure 3 montre le dispositif des figures 1 et 2 au cours d'un choc avec un obstacle,

- les figures 4a, 4b montrent plus en détail le module élastique du dispositif des figures 1 à 3,

- la figure 5 montre schématiquement en vue de derrière un mode de réalisation alternatif de dispositif déflecteur aérodynamique selon l'invention,

- la figure 6 montre schématiquement en vue en coupe de côté un mode de réalisation alternatif de dispositif déflecteur aérodynamique selon l'invention,

- la figure 7 montre schématiquement en vue en coupe de côté et en éclaté un autre mode de réalisation alternatif de dispositif déflecteur aérodynamique selon l'invention,

- les figures 8 et 9 montrent schématiquement en vue en coupe de côté encore un autre mode de réalisation de dispositif déflecteur aérodynamique avec un cadre fixe et un cadre mobile.

Sur toutes les figures, les mêmes références se rapportent aux mêmes éléments.

Les réalisations décrites en faisant référence aux figures sont des exemples. Bien que la description se réfère à un ou plusieurs modes de réalisation, ceci ne signifie pas nécessairement que chaque référence concerne le même mode de réalisation, ou que les caractéristiques s'appliquent seulement à un seul mode de réalisation. De simples caractéristiques de différents modes de réalisation peuvent également être combinées pour fournir d'autres modes de réalisations.

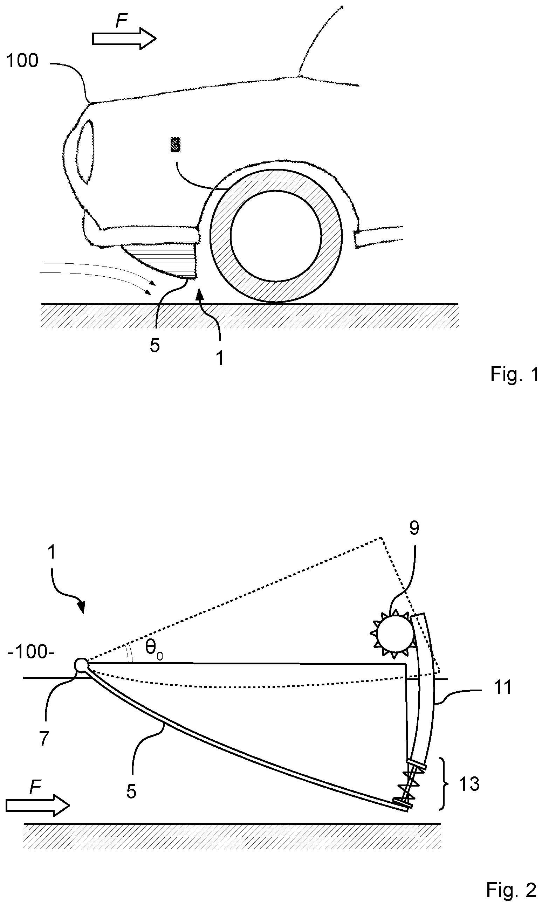

En figure 1 est montré de façon schématique un véhicule 100 avec un dispositif déflecteur aérodynamique 1 selon l'invention. Le véhicule 100 est représenté en partie et en vue de côté, centrée sur sa partie avant, au niveau d'une des roues avant 3.

Le véhicule 100 représenté en figure 1 avance de la droite vers la gauche, l'air, considéré immobile dans le référentiel terrestre, circule donc de la gauche vers la droite en figure 1. L'orientation du flux d'air F permet de définir un « aval » et un « amont » respectivement dans le sens de parcours du flux d'air et dans le sens contraire. Les termes tels que « avant », « après », « devant », « derrière » sont définis en utilisant la direction et le sens de circulation de la voiture 100 comme orientation.

Les termes utilisés ci-après comme « haut », « bas », « au-dessus », « au-dessous » sont définis en utilisant la verticale locale, définie avec le véhicule en conditions de circulation normales sur terrain plat, orientée par la gravité.

La direction transverse est donnée par l'axe de rotation des roues 3, en ligne droite.

Le dispositif déflecteur aérodynamique 1 est disposé en amont de la roue 3, sous la carrosserie à l'avant de la voiture 100. Le dispositif aérodynamique 1 est configuré pour basculer entre une position escamotée et une position déployée. En figure 1, le dispositif déflecteur aérodynamique 1, dont une paroi déflectrice 5 est visible, est représenté en position déployée.

Le dispositif déflecteur aérodynamique 1 est représenté plus en détail en figure 2.

En figure 2, le dispositif déflecteur aérodynamique 1 représenté comporte une paroi déflectrice 5, qui peut être mis en mouvement autour d'un axe 7, un pignon 9 coopérant avec une crémaillère 11 pour la mise en mouvement de la paroi déflectrice 5 et un module élastique 13.

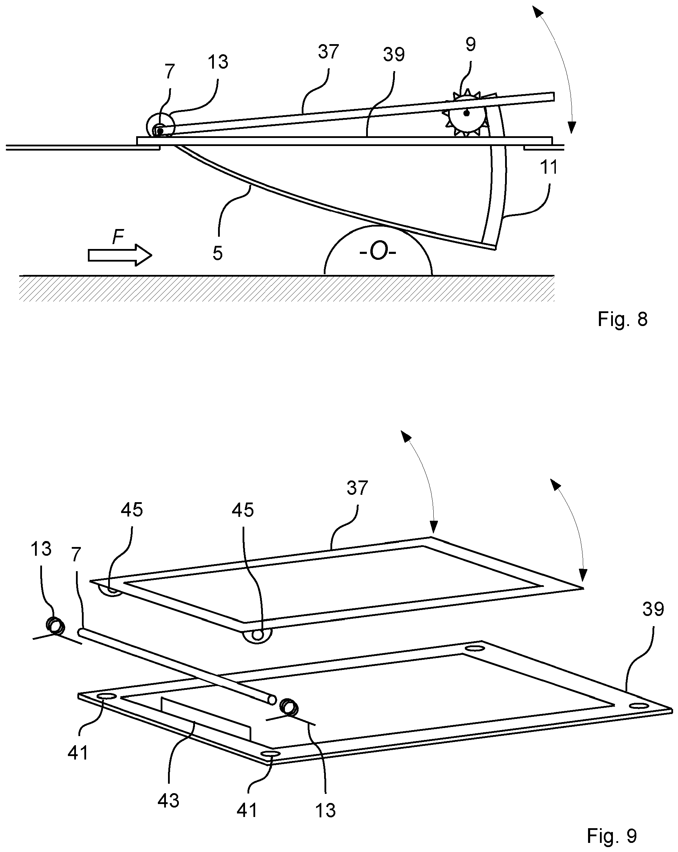

La paroi déflectrice 5 est mobile en rotation autour de l'axe 7 entre une position déployée (représentée en traits pleins) et une position escamotée (représentée en traits pointillés). Dans la position déployée, la paroi déflectrice 5 est abaissée et dépasse en majeure partie de la carrosserie du véhicule 100. Dans la position escamotée, la paroi déflectrice 5 est relevée dans un logement de la carrosserie du véhicule 100 où elle est au moins partiellement escamotée. Le dispositif déflecteur comprend en outre un cadre fixe 39 servant de support, illustré en figure 9, avec la paroi déflectrice 5 étant mobile selon une position escamotée ou déployée par rapport à ce cadre fixe 39.

La position de la paroi déflectrice 5 est repérée par l'angle de rotation θ entre la position escamotée (θ = 0) et la position adoptée. En particulier, lorsque la paroi déflectrice 5 est en position déployée l'angle de rotation θ est de valeur $\theta_0$ maximale.

La paroi déflectrice 5 présente un profil aérodynamique en rampe ou en semi-ogive à partir de l'axe 7, jusqu'à un bord de fuite situé à l'arrière et en aval, vers la roue 3 du véhicule 100. La paroi déflectrice 5 est réalisée en matériau dur, léger et résistant aux chocs, par exemple en plastique moulé, notamment par injection. Le plastique utilisé peut être additionné de fibres, par exemple de verre ou carbone.

La paroi déflectrice 5 présente une section en U, dont les branches verticales se raccourcissent en approchant de l'axe 7, et dont la largeur au niveau du bord de fuite correspond à celle de la roue 3 à recouvrir.

La mise en mouvement de la paroi déflectrice 5 entre les positions déployée et escamotée se fait par mise en rotation du pignon 9 au moyen d'un actionneur, en particulier électrique, par exemple au moyen d'un moteur électrique, commandé par une unité de contrôle du véhicule 100. Une telle unité de contrôle comporte généralement une mémoire électronique et des moyens de calcul, qui sont soit dédiés soit distribués dans un réseau électronique du véhicule 100. L'unité de contrôle est configurée pour piloter une ou plusieurs fonctions du véhicule 100, en particulier au moyen d'interrupteurs électroniques tels que des transistors.

En position déployée, la paroi déflectrice 5 est abaissée, et se trouve hors du logement situé dans la carrosserie du véhicule 100, et se trouve sur le trajet du flux d'air F entrant, en l'absence de paroi déflectrice 5, dans le passage de la roue 3 de la figure 1. En entrant dans le passage de roue, l'air génère des turbulences qui augmentent la traînée.

Le pignon 9 coopère avec la crémaillère 11, qui est translaté verticalement vers le bas ou le haut selon le sens de rotation du pignon 9. La crémaillère 11 est courbée, en particulier avec un rayon de courbure correspondant à la longueur de la paroi déflectrice 5, entre l'axe 7 et son extrémité arrière au niveau de laquelle elle est reliée à la crémaillère 11. La crémaillère 11 est ici en particulier de section rectangulaire, avec les grands côtés dans le sens longitudinal du véhicule 100, et des crénelures disposées sur sa face avant.

D'autres modes de réalisation peuvent être obtenus en plaçant les crénelures (et le pignon 9) soit sur la face arrière soit sur un côté de la crémaillère 11.

L'extrémité inférieure de la crémaillère 11 est reliée à un module élastique 13. L'autre extrémité du module élastique 13 est reliée à l'extrémité arrière (au niveau du bord de fuite) de la paroi déflectrice 5. Le module élastique 13 est déformable élastiquement entre deux états : un état de moindre déformation, adopté en l'absence d'actions extérieures, et un état déformé, adopté lorsqu'un obstacle exerce une force, en particulier une force verticale, sur la paroi déflectrice 5.

Par « état de moindre déformation » on entend ici un état adopté en fonctionnement normal dans lequel l'énergie élastique de déformation est minimale. En particulier, en présence de butées mécaniques, l'état de moindre déformation peut être différent de la configuration de repos de l'élément élastique considéré.

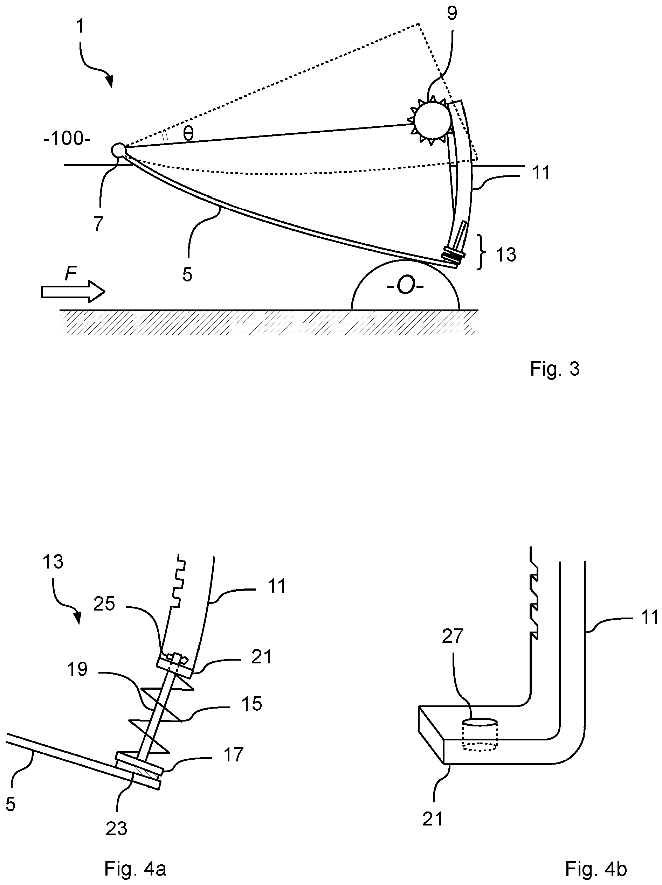

Le cas d'un choc avec un obstacle O est représenté en figure 3. Dans la figure 3, l'obstacle O est de hauteur supérieure à l'intervalle vertical entre le sol et le bord inférieur de la surface déflectrice 5. En conséquence, lorsque le véhicule 100 roule sur ledit obstacle O, l'obstacle O exerce une force normale à la surface déflectrice 5 au point de contact. En particulier, la force exercée par l'obstacle O comporte une composante verticale vers le haut importante.

L'obstacle O peut par exemple être une branche tombée d'un arbre sur la chaussée, une pierre ayant roulé depuis un bas-côté, un objet abandonné depuis une voiture plus avant dans la circulation. Les obstacles O percutent la paroi déflectrice 5 avec une vitesse proche de ou égale à celle du véhicule. Or, comme précédemment décrit, la paroi déflectrice 5 n'est abaissée que lorsque la vitesse est suffisamment importante, en particulier supérieure aux vitesses usuelles en agglomération (environ 50 à 60 km/h).

Des modes de réalisation particulier prévoient que le déploiement de la paroi déflectrice 5 se fasse à partir d'une vitesse de 60 km/h, c'est à dire une vitesse supérieure à la vitesse limite légale en agglomération (50 km/h). La paroi déflectrice 5 est escamotée lorsque la vitesse du véhicule redevient inférieure à 40 km/h, vitesse légèrement supérieure aux vitesses usuelles de franchissement d'obstacles fixes et signalisés tels que les ralentisseurs. L'écart entre la vitesse de déploiement et la vitesse d'escamotage permet, par hystérésis, d'éviter un actionnement répété et intempestif du mécanisme de déploiement de la paroi déflectrice 5 lorsque la vitesse oscille autour de la vitesse de déploiement.

Un choc entre un obstacle O et la paroi déflectrice 5 engendre des forces, couples et vibrations qui peuvent, en l'absence de module élastique 13, conduire à une déformation ou une rupture de la paroi déflectrice 5.

En figure 3, l'obstacle O repousse la paroi déflectrice 5 vers le haut, ce qui amène le module élastique 13 à l'état déformé. A l'état déformé, le module élastique 13 est ici comprimé, l'angle θ de position de la paroi déflectrice 5 est alors inférieur à $\theta_0$, la paroi déflectrice 5 est au moins partiellement relevée, de sorte à s'effacer et laisser passer l'obstacle O.

La figure 4a montre plus en détail un mode de réalisation de module élastique 13 utilisable dans les exemples des figures 1, 2 et 3.

En figure 4a, le module élastique 13 est représenté en prise avec la portion arrière de la paroi déflectrice 5 et avec l'extrémité inférieure de la crémaillère 11. Le module élastique 13 comporte essentiellement un élément élastique 15, une base inférieure 17, une tige 19 et une base supérieure 21.

La base inférieure 17 est solidaire de la portion arrière de la paroi déflectrice 5. Ladite base inférieure 17 comporte une pièce métallique aplatie, collée, vissée ou rivetée à la portion arrière de la paroi déflectrice 5. Dans l'exemple de la figure 4a, une semelle 23 en caoutchouc ou plastique souple est implémentée entre la base inférieure 17 et la paroi déflectrice 5. Cette semelle 23 permet d'absorber une partie des vibrations de faible amplitude engendrées par le décrochement des lignes de courant au niveau du bord de fuite de la paroi déflectrice 5. Ces vibrations peuvent nuire à long terme à l'éventuel collage de la base inférieure 17 en l'absence d'élément absorbant.

De la base inférieure 17 s'étend la tige 19, le long de la normale à la base inférieure 17, vers le haut. La tige 19 et la base inférieure 17 peuvent venir de matière, et être réalisées au cours d'une seule étape commune d'usinage, par exemple par moulage tournage ou fraisage.

L'extrémité supérieure de la tige 19 est en prise avec la base supérieure 21 qu'elle traverse en partie verticalement. La base supérieure 21 est plane, réalisée en métal, et percée en son centre d'un perçage (voir figure 4b).

Une goupille 25 est insérée transversalement dans la tige 19, au niveau de son extrémité supérieure, au dessus de la base supérieure 21. La goupille 25 empêche la tige 19 de se désolidariser de la base supérieure 21 en retenant une portion de la tige 19 au dessus de la base supérieure 21. La goupille 25 peut être une goupille de type bêta, fendue, annulaire ou simplement cylindrique.

L'élément élastique 15, ici un ressort hélicoïdal en compression, entoure la tige 19. Lorsque le module élastique 13 est déformé par une contrainte, la tige 19 est enfoncée dans le perçage de la base supérieure 21, et l'élément élastique 13 est comprimé entre la base inférieure 17 et la base supérieure 19 qui se rapprochent.

L'élément élastique 15 est sélectionné de sorte que la contrainte requise pour comprimer le module élastique 13 est supérieure à la contrainte engendrée par la pression de l'air dans la gamme de vitesses attendues en circulation normale (50 à 130 km/h) sur la surface de la paroi déflectrice 5, mais inférieure à la contrainte de déformation ou de rupture de la paroi déflectrice 5. En particulier, la contrainte de déformation du module élastique 13 est inférieure à une fraction prédéterminée de la valeur théorique des contraintes minimales, en particulier des forces, entraînant une déformation irréversible ou une rupture de la paroi déflectrice 5, par exemple 70 % de cette valeur.

Des modes de réalisation alternatifs peuvent substituer au ressort hélicoïdal de l'élément élastique 15 une lame-ressort, une bande élastique, un vérin à circulation de fluide, ou bien un corps compressible ou étirable en matériau élastique.

La figure 4b illustre un mode de réalisation particulier de la base supérieure 21. La figure 4b représente schématiquement l'extrémité inférieure de la crémaillère 11 du dispositif déflecteur aérodynamique 1.

La base supérieure 21 est ici une portion extrémale coudée de la crémaillère 11, dans laquelle est pratiqué un perçage 27, de forme et dimensions correspondant à la tige 19. La base supérieure 21 est ainsi obtenue simplement par perçage puis pliage transversal de la portion extrémale inférieure de la crémaillère 11. De la sorte, ni pièce séparée ni fixation supplémentaire ne sont requises.

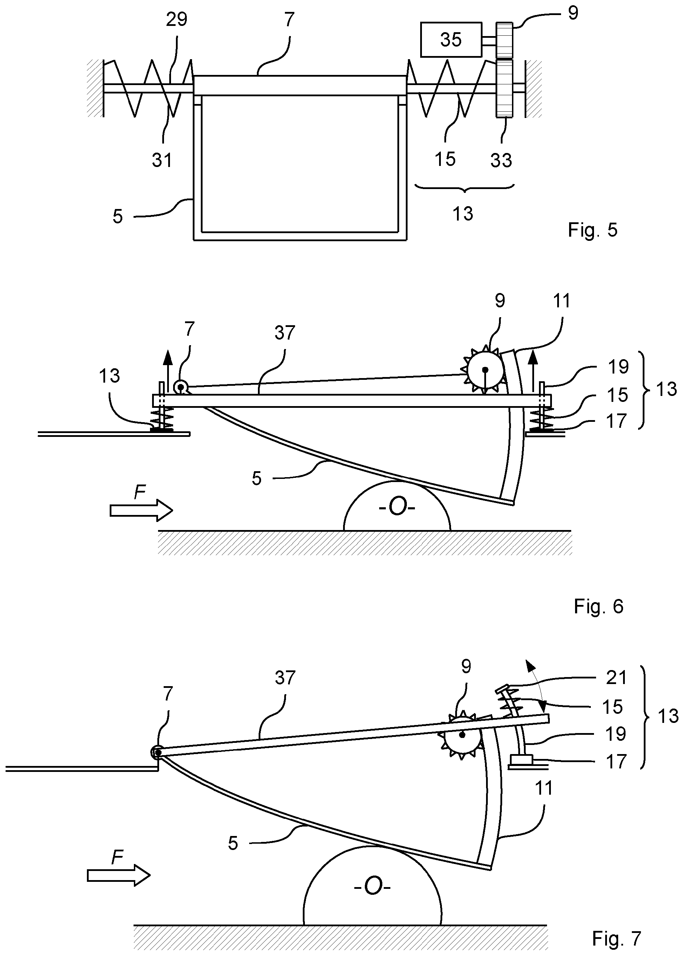

La figure 5 illustre schématiquement un mode de réalisation alternatif de module élastique 13 pour d'autres modes de réalisation de l'invention. En figure 5, le dispositif déflecteur aérodynamique 1 est vu de derrière, depuis l'emplacement de la roue 3. La paroi déflectrice 5 est ainsi vue depuis son bord de fuite, en regardant en direction longitudinale vers l'axe 7. L'axe 7 de la paroi déflectrice 5 entoure ici un arbre fixe 29. L'arbre fixe 29 est en particulier réalisé en métal, et relié à ses extrémités à un châssis solidaire du véhicule 100.

Le dispositif déflecteur aérodynamique 1 comporte un élément élastique de rappel, ici un ressort de rappel 31. Le ressort de rappel 31 est un ressort hélicoïdal en torsion entourant une portion extrémale de l'arbre fixe 29. Il est relié d'une part au châssis solidaire du véhicule 100, et d'autre part à la paroi déflectrice 5. Le ressort de rappel 31 est configuré pour ramener la paroi déflectrice 5 en position escamotée en l'absence d'autres contraintes par retour à une configuration de moindre déformation.

A l'autre extrémité de l'arbre fixe 29 est disposé le module élastique 13 qui sert aussi au déploiement de la paroi déflectrice 5. Le module élastique 13 comporte ici un pignon d'actionnement 33 formant avec le pignon 9 un engrenage mis en mouvement par l'actionnement d'un moteur 35, en particulier au moyen d'une unité de contrôle (non-représentée).

Le pignon d'actionnement 33 est en prise avec une extrémité du ressort formant l'élément élastique 15. L'élément élastique 15 est ici un ressort hélicoïdal en torsion. L'autre extrémité de l'élément élastique 15 est en prise avec la paroi déflectrice 5.

Lorsque le moteur 35 est alimenté, il met en mouvement le pignon 9, qui met à son tour le pignon d'actionnement 33 en rotation. La rotation du pignon d'actionnement 33 déforme l'élément élastique 15 qui exerce alors un couple croissant sur la paroi déflectrice 5 dans le sens entraînant celle-ci vers la position déployée $\theta = \theta_0$.

Le couple croissant exercé sur la paroi déflectrice 5 s'oppose au couple de rappel exercé par le ressort de rappel 31 qui entraîne et maintient initialement la paroi déflectrice en position escamotée $\theta = 0$. Lorsque le couple croissant atteint puis dépasse la valeur du couple de rappel, la paroi déflectrice 5 est progressivement amenée en position déployée $\theta = \theta_0$. Le ressort de rappel 31 est alors progressivement déformé et exerce un couple de rappel augmentant avec la rotation de la paroi déflectrice 5.

A l'état déployée θ = θ₀ de la paroi déflectrice 5, la position est maintenue par un équilibre entre le couple de rappel et le couple croissant. La position adoptée est alors une position d'équilibre élastique. Un choc avec un obstacle O écartant la paroi déflectrice 5 de ladite position d'équilibre entraîne un déséquilibre entre le couple de rappel et le couple croissant dans le sens ramenant la paroi déflectrice 5 vers la position d'équilibre θ = θ₀.

La présence du module élastique 13 réduit les risques de dommages au dispositif déflecteur aérodynamique 1 lors de chocs avec un obstacle O. Ceci permet d'allonger la durée de vie attendue du produit, et réduit les risques lors de la circulation en véhicule 100.

La figure 6 montre un exemple plus général de module élastique 13, adapté à divers mécanismes de dispositifs déflecteurs aérodynamique 1. Dans le mode de réalisation particulier de la figure 6, le dispositif déflecteur 1 comporte un pignon 9 et une crémaillère 11 analogues des modes de réalisation des figures 2 et 3.

Le mode de réalisation de dispositif aérodynamique 1 de la figure 6 comporte en particulier un cadre mobile 37. Le cadre mobile 37 est de forme rectangulaire, ouvert en son centre. Le cadre mobile 37 forme un support pour les éléments du dispositif déflecteur aérodynamique 1. L'axe 7 est en particulier relié et articulé au cadre mobile 37. Le pignon 9 est lui aussi solidaire du cadre mobile 37 par rapport auquel le moteur l'entraîne en rotation.

De tels cadres mobiles 37 sont utilisés comme support pour obtenir un dispositif déflecteur aérodynamique 1 modulaire, qui peut être assemblé et transporté aisément en bloc entre les différents ateliers d'assemblage du véhicule 100.

Le cadre 37 est destiné à recouvrir la bordure d'une ouverture dans la carrosserie ou le bas de caisse du véhicule 100, en amont du passage de roue 3 du véhicule 100. Le cadre 37 repose sur des modules élastiques 13, situés à chacun des coins du cadre 37. Les modules élastiques 13 sont ici déformables par translation verticale du cadre 37, et donc du dispositif déflecteur aérodynamique 1 attaché au cadre 37.

D'autres modes de réalisation sont obtenus en utilisant un nombre différent de modules élastiques 13, par exemple trois, un au milieu d'un côté du cadre mobile 37, et deux autres aux extrémités du côté opposé (montage en triangle).

Les modules élastiques 13 sont à l'état de moindre déformation lorsqu'ils sont comprimés, ce qui maintient le cadre 37 et le dispositif déflecteur aérodynamique 1 en position basse, correspondant à l'état déployé de la paroi déflectrice 5.

Un autre mode de réalisation directement dérivé prévoit l'utilisation de ressorts en extension, disposés sous le cadre mobile 37.

Les modules élastiques 13 comportent chacun une tige 19, qu'entoure dans ce mode de réalisation un élément élastique 15, ici un ressort hélicoïdal déformable en étirement, disposé entre le cadre mobile 37 et une base inférieure 17 des modules élastiques 13. La tige 19 passe par un perçage dans le cadre mobile 37 et guide le cadre mobile 37 en translation verticale.

Lorsque la paroi déflectrice 5 entre en contact avec l'obstacle O, les forces exercées sur la paroi déflectrice 5 translatent l'ensemble du module déflecteur aérodynamique 1 vers le haut en soulevant le cadre mobile 37, ce qui étire les modules élastiques 13. Une fois l'obstacle O passé, les modules élastiques 13 exercent une force de rappel sur le cadre mobile 37 qui le ramène en position basse de déploiement maximal de la paroi déflectrice 5.

En figure 7, le module déflecteur aérodynamique 1, réalisé selon un mode différent, comporte à nouveau un cadre mobile 37, ici mobile en rotation autour de l'axe 7 de la paroi déflectrice 5.

Le cadre mobile 37 est ici en prise à son extrémité avant avec l'axe 7, et à son extrémité arrière avec au moins un module élastique 13, préférentiellement deux, un à chaque extrémité transverse du côté arrière du cadre mobile 37.

Le module élastique 13 visible en figure 7 comporte une tige 19 courbée, qui guide en rotation le cadre mobile 37 en rotation. L'élément élastique 13 est ici un ressort hélicoïdal déformable en compression, entourant la tige 19, disposé entre le cadre mobile 37 et une base supérieure du module élastique 13.

La base inférieure 17 du module élastique 13 sur laquelle le cadre mobile 37 vient en appui en l'absence d'obstacle O forme une butée et peut comporter un disque de matériau absorbant les vibrations, par exemple une semelle en caoutchouc ou plastique mou.

En figures 8 et 9 est représenté un autre mode de réalisation de module déflecteur aérodynamique 1, qui comporte en outre un cadre fixe 39. Le cadre fixe 39 est de forme rectangulaire, avec une ouverture rectangulaire en son centre (voir figure 9). Il comporte des perçages 41 dans ses coins, qui servent à attacher par vissage ou rivetage le cadre fixe 39 à un fond du véhicule 100.

Le cadre fixe 39 comporte aussi un une articulation 43 qui interagit avec l'axe 7. L'axe 7 est entouré par des ressorts hélicoïdaux déformables en torsion formant les modules élastiques 13. Les ressorts hélicoïdaux 13 comportent chacun deux extrémités, respectivement solidaires du cadre mobile 37 et du cadre fixe 39.

L'axe 7 est aussi en prise avec le cadre mobile 37 via des charnières 45, de sorte que le cadre mobile 37 est mobile en rotation autour de l'axe 7. Les ressorts hélicoïdaux 13 sont à leur état de moindre déformation lorsque le cadre mobile 37 est disposé parallèlement au cadre fixe 39. Le cadre mobile 37 porte à nouveau les éléments constitutifs du module déflecteur aérodynamique 1 tels que le pignon 9, la crémaillère 11 et le paroi déflectrice 5.

Lorsque la paroi déflectrice 5 rencontre un obstacle O (figure 8), ledit obstacle O exerce une force verticale vers le haut qui entraîne la paroi déflectrice 5 vers le haut. La paroi déflectrice 5 s'efface en entraînant le cadre mobile 37 en rotation, son extrémité arrière étant entraînée vers le haut. Lorsque l'obstacle O est passé, les ressorts hélicoïdaux 13 exercent un couple sur le cadre mobile 37 qui le ramène en position abaissée, parallèle au cadre fixe 39.

De tels modules déflecteurs aérodynamiques 1 avec un cadre fixe 39 et un cadre mobile 37 portant la paroi déflectrice 5 et son mécanisme d'actionnement 9, 11, peuvent être réalisés avec différents mécanismes d'actionnement 9, 11 par exemple avec un axe longitudinal et une paroi déflectrice 5 mobile en rotation autour de cet axe.

L'invention permet d'obtenir des modules déflecteurs aérodynamiques 1 dont la paroi déflectrice 5 s'efface lors d'un choc avec un obstacle O avant déformation ou rupture de ladite paroi déflectrice 5.

## Revendications

1. Dispositif déflecteur aérodynamique pour roue de véhicule automobile, comprenant :

   • une paroi déflectrice (5) montée mobile par rapport à un cadre fixe (39) entre une position escamotée d'une part où la paroi déflectrice (5) est relevée et une position déployée dans laquelle la paroi déflectrice (5) est abaissée par rapport au cadre fixe (39),
   **caractérisé en ce qu'**il comporte en outre un module élastique (13) déformable élastiquement, agencé de manière à déplacer la paroi déflectrice (5) vers la position déployée lorsque la paroi déflectrice n'est plus dans la position déployée, le module élastique (13) étant disposé en prise de force avec un cadre mobile (37) portant un mécanisme de déploiement de la paroi déflectrice (5).

2. Dispositif déflecteur selon la revendication 1, **caractérisé en ce que** le module élastique (13) comporte un ressort hélicoïdal, ou une lame-ressort, ou un vérin à circulation de fluide, ou une bande élastique, ou encore un corps compressible ou étirable en matériau élastique.

3. Dispositif déflecteur selon la revendication 1 ou 2, **caractérisé en ce qu'**il comporte un axe (7) transversal autour duquel la paroi déflectrice (5) est mise en rotation, formant une charnière entre le cadre mobile (37) et un cadre fixe (39), et **en ce que** le module élastique (13) est disposé autour de l'axe (7) transversal et entre en prise d'une part avec le cadre mobile (37) et d'autre part avec le cadre fixe (39).

4. Dispositif déflecteur selon la revendication 1 ou 2, **caractérisé en ce que** le module élastique (13) comporte un ressort hélicoïdal déformable en torsion et **en ce que** le ressort en torsion entoure l'axe (7) transversal, et **en ce que** ledit ressort hélicoïdal comporte deux extrémités, respectivement en prise avec le cadre fixe (39) et le cadre mobile (37).

5. Dispositif déflecteur selon la revendication 1 ou 2, **caractérisé en ce qu'**il comporte plusieurs modules élastiques (13) déformables en translation verticale et disposés sur les bords du cadre mobile (37).

## Patentansprüche

1. Aerodynamische Ablenkvorrichtung für Kraftfahrzeug, umfassend:

   - eine Ablenkwand (5), die bezüglich eines festen Rahmens (39) zwischen einerseits einer eingeklappten Position, in der die Ablenkwand (5) bezüglich des festen Rahmens (39) angehoben ist, und einer ausgeklappten Position, in der die Ablenkwand (5) bezüglich des festen Rahmens (39) abgesenkt ist, beweglich montiert ist, **dadurch gekennzeichnet, dass** sie ferner ein elastisches Modul (13) aufweist, das elastisch verformbar ist und dazu angeordnet ist, die Ablenkwand (5) in die ausgeklappte Position zu verschieben, wenn sich die Ablenkwand nicht mehr in der ausgeklappten Position befindet, wobei das elastische Modul (13) mit einem beweglichen Rahmen (37), der einen Mechanismus zum Ausklappen der Ablenkwand (5) trägt, kraftschlüssig verbunden ist.

2. Ablenkvorrichtung nach Anspruch 1, **dadurch gekennzeichnet, dass** das elastische Modul (13) eine Schraubenfeder oder eine Blattfeder oder einen Druckmittelzylinder oder ein elastisches Band oder auch einen komprimierbaren oder dehnbaren Körper aus elastischem Material umfasst.

3. Ablenkvorrichtung nach Anspruch 1 oder 2, **dadurch gekennzeichnet, dass** sie eine Querachse (7) aufweist, um die die Ablenkwand (5) in Drehung versetzt wird und die ein Scharnier zwischen dem beweglichen Rahmen (37) und einem festen Rahmen (39) bildet, und dass das elastische Modul (13) um die Querachse (7) angeordnet und ist und in Eingriff einerseits mit dem beweglichen Rahmen (37) und andererseits mit dem festen Rahmen (39) steht.

4. Ablenkvorrichtung nach Anspruch 1 oder 2, **dadurch gekennzeichnet, dass** das elastische Modul (13) eine Schraubenfeder umfasst, die torsionsverformbar ist, und dass die Torsionsfeder die Querachse (7) umgibt, und dass die Schraubenfeder zwei Enden aufweist, die mit dem festen Rahmen (39) bzw. dem beweglichen Rahmen (37) in Eingriff stehen.

5. Ablenkvorrichtung nach Anspruch 1 oder 2, **dadurch gekennzeichnet, dass** sie mehrere elastische Module (13) aufweist, die in vertikaler Translation verformbar und an den Rändern des beweglichen Rahmens (37) angeordnet sind.

(37).

**Claims**

1. Aerodynamic deflector device for a motor vehicle wheel, comprising:

   • a deflecting panel (5) movably mounted relative to a fixed frame (39) between a retracted position in which the deflecting panel (5) is raised and an extended position in which the deflecting panel (5) is lowered relative to the fixed frame (39),
   **characterized in that** it also comprises an elastically deformable elastic module (13), arranged so as to move the deflecting panel (5) to the extended position when the deflecting panel is no longer in the extended position, the elastic module (13) being arranged in force-engagement with a mobile frame (37) bearing a mechanism for extending the deflecting panel (5).

2. Deflector device according to Claim 1, **characterized in that** the elastic module (13) comprises a helical spring, or a spring leaf, or a fluid circulation cylinder, or an elastic band, or a compressible or extendible body made from an elastic material.

3. Deflector device according to Claim 1 or 2, **characterized in that** it comprises a transverse shaft (7) about which the deflecting panel (5) is rotated, forming a hinge between the mobile frame (37) and a fixed frame (39), and **in that** the elastic module (13) is arranged around the transverse shaft (7) and engages on one hand with the mobile frame (37) and on the other hand with the fixed frame (39).

4. Deflector device according to Claim 1 or 2, **characterized in that** the elastic module (13) comprises a helical spring deformable in torsion and **in that** the torsion spring surrounds the transverse shaft (7), and **in that** said helical spring comprises two ends, engaging with the fixed frame (39) and the mobile frame (37) respectively.

5. Deflector device according to Claim 1 or 2, **characterized in that** it comprises several elastic modules (13) that are deformable in vertical translation and arranged on the edges of the mobile frame

Fig. 1

Fig. 2

Fig. 3

Fig. 4a

Fig. 4b

Fig. 5

Fig. 6

Fig. 7

Fig. 8

Fig. 9

## RÉFÉRENCES CITÉES DANS LA DESCRIPTION

**Documents brevets cités dans la description**

- FR 2927303 A1

- EP 1040985 A1